# EUROPÄISCHE PATENTANMELDUNG

(11) **EP 1 526 476 A2**
(43) Veröffentlichungstag der Anmeldung: **27.04.2005**
(21) Anmeldenummer: 05000605.5
(22) Anmeldetag: 11.02.1998
(51) Int. Cl.: G06K 19/077

(54) **Minichipkarte sowie Verfahren zu ihrer Herstellung**

(30) Priorität: 02.04.1997 DE 19713641
(62) Teilanmeldung aus: 98102374.0
(71) Anmelder: Gemplus GmbH, 70794 Filderstadt (DE)
(72) Erfinder: Schmidt, Frank, Dr., 99891 Fischbach (DE)
(74) Vertreter: Grünecker, Kinkeldey, Stockmair & Schwanhäusser Anwaltssozietät

(57) **Zusammenfassung**

Minichipkarte mit einem Trägerfilm, der auf einer Seite Anschlußkontakte für die Karte trägt und auf der anderen Seite den IC, wobei der IC über elektrische Verbindungen, vorzugsweise über Bond-Verbindungen, durch Löcher des Trägerfilms hindurch mit den Anschlußkontakten verbunden ist, einer gemouldeten Chipverkappung aus Kunststoff, durch die der Chip und die elektrischen Verbindungen verkappt sind, wobei die gemouldete Chipverkappung gleichzeitig als Kartenkörper dient und somit die für die Minichipkarte gewünschten Außenabmessungen aufweist.

## Beschreibung

Die vorliegende Erfindung betrifft eine Minichipkarte sowie ein Verfahren zu ihrer Herstellung.

Insbesondere im Bereich Mobilfunk haben sich sogenannte Minichipkarten (ID-000-Format) durchgesetzt, die Kantenlängen von 15 und 25 mm aufweisen. Aus Gründen der Fertigungsprozeßoptimierung werden diese Karten üblicherweise aus Standardkarten mit ID-1-Format ausgestanzt, so daß im Fertigungsprozeß praktisch kein Unterschied zwischen einer Herstellung einer Minichipkarte bzw. SIM-Karte und einer Standardkarte besteht.

Auch werden Standardkarten im ID-1-Format angeboten, in denen die Minichipkarten vorgestanzt sind und über vorzugsweise drei Bruchlaschen am Kartenkörper gehalten werden. Der Endkunde kann die Karte dann entsprechend seinen Bedürfnissen entweder als Standardkarte verwenden oder die Minichipkarte aus der ID-1-Karte herausbrechen und als übliche SIM-Karte verwenden. Auch wurden bereits Varianten vorgeschlagen, bei denen die Minichipkarte herstellerseitig bereits vollständig aus dem großen Kartenkörper ausgestanzt ist und nur über ein auf der den Kontakten abgewandten Seite der Karte mit einem Klebeband in dem großen Kartenkörper gehalten wird.

Obwohl diese Herstellungsart für Minichipkarten aus Sicht einer einfachen Herstellungsweise sinnvoll ist, so stellt dies dennoch einen unnötigen Materialverbrauch dar, der unter Kostengesichtspunkten nicht wünschenswert ist.

Es ist die Aufgabe der vorliegenden Erfindung, eine Lösung anzugeben, mit der Minichipkarten in einfacher und kostengünstiger Weise hergestellt werden können.

Diese Aufgabe wird durch die Gegenstände der Ansprüche 1, 6, 7 und 11 gelöst.

Bevorzugte Ausgestaltungen der vorliegenden Erfindung sind Gegenstand der Unteransprüche.

Die vorliegende Erfindung baut auf der Erkenntnis auf, daß eine Minichipkartenherstellung auf Grundlage bewährter und bereits standardisierter Prozeßschritte erfolgen kann, wie sie zur Chipkartenmodulherstellung verwendet werden. Insbesondere können Minichipkarten, aufbauend auf Modulherstellungsschritten, erstellt werden, wie sie beispielsweise aus der DE 44 01 588 A1 bekannt sind, die auf die Anmelderin der vorliegenden Erfindung zurückgeht und auf die ausdrücklich Bezug genommen wird.

Gemäß den erwähnten bekannten Verfahren wird das Verkapseln der Chips auf dem Trägerfilm nicht mehr durch einen Harztropfen erreicht, sondern mittels Mouldtechnologie. Gemäß der Mouldtechnologie wird über dem zu verkapselnden Chip eine Gußform angebracht, die mit dem Trägerfilm abschließt, und anschließend wird über eine Öffnung eine flüssige Plastikgußmasse eingeführt, die extrem rasch aushärtet und den entsprechenden Chip vorzugsweise in einen quadratischen Plastikblock von mehreren Millimetern Kantenlänge, der mittels geeigneter Verfahren auf dem Trägerfilm haftet, einschließt. Mittels dieser Technologie sind hochgenaue und extrem belastbare Verkapselungen erzielbar, wobei die Form der Verkapselung entsprechend der aufgesetzten Form nahezu beliebig ausgestaltet werden kann.

Der vorliegenden Erfindung liegt die Erkenntnis zugrunde, daß dieser Prozeßschritt dazu verwendet werden kann, nicht nur eine extrem harte Verkapselung des Chips zu erreichen, sondern die Verkapselung so weit zu vergrößern, daß sie die Form einer Minichipkarte aufweist und somit das fertige Chipmodul bereits die eigentliche Minichipkarte darstellt.

Gemäß der vorliegenden Erfindung ist somit zur Herstellung von Minichipkarten nicht mehr der Umweg über Standardkarten erforderlich, aus denen die Minichipkarten in einem abschließenden Prozeßschritt ausgestanzt werden, sondern die Minichipkarte wird bereits während der "Modulherstellung" erstellt.

Gemäß einem weiteren Aspekt der vorliegenden Erfindung wird die auf diese Weise mittels Mouldtechnologie hergestellte Minichipkarte mit einer Dicke ausgeführt, die geringfügig unter der Dicke von Standardchipkarten liegt. Auf diese Weise wird ermöglicht, daß die so gefertigten Minichipkarten in Adapterchipkarten eingesetzt werden können. Die Adapterchipkarte kann dabei aus einer Standardkarte bestehen, in die an einer geeigneten Stelle eine Struktur ausgefräst wurde, die der Form der Minichipkarte entspricht. Die Tiefe der Einfräsung in der Adapterkarte entspricht vorzugsweise der Dicke der Minichipkarte einschließlich einer Klebeschicht, so daß nach dem Einkleben der Minichipkarte in den gefrästen Bereich der Adapterkarte die Minichipkarte bündig mit der Oberfläche der Adapterkarte abschließt.

Unter "Mouldtechnologie" bzw. unter "gemouldeter Chipverkappung" wird verstanden, daß die Kunststoffverkapselung, die verwendet wird, um den Chip und die Bonddrähte zu verkapseln, dadurch erreicht wird, daß an der Stelle des zu verkapselnden ICs eine Form über die Trägerfolie gesetzt wird, die zumindest einen Einlaßkanal aufweist, durch den verflüssigter Kunststoff unter Druck eingebracht wird. Der Kunststoff verfestigt sich dann zu dem durch die Form vorgegebenen Körper, wodurch äußerst präzise Kantenformen erreicht werden. Im Prozeß werden dabei vorzugsweise eine Vielzahl von Chips gleichzeitig verkappt, indem eine Form verwendet wird, die gleichzeitig eine Vielzahl von Chips überdeckt und in die entsprechend verflüssigter Kunststoff, der vorzugsweise durch Schmelzen einer Kunststoffpatrone erhalten wird, eingeführt wird.

Gemäß einem weiteren Aspekt der vorliegenden Erfindung wird die Minichipkarte bei ihrer Herstellung auf der nicht kontaktbehafteten Seite bereits mit einem Doppelklebeband mit Schutzschicht versehen und weist zusammen mit dem Doppelklebeband und der Schutzfolie eine Dicke auf, die der üblicher Minichipkarten entspricht. Wird die Minichipkarte für weitere Anwendungen in eine Adapterkarte eingesetzt, so wird die Schutzschicht entfernt und die Minichipkarte in die erwähnte Ausfräsung der Adapterkarte eingesetzt, wobei die Ausfräsung eine Tiefe aufweist, die der der Minichipkarte ohne der Schutzschicht entspricht. Vorzugsweise weist das Doppelklebeband zur Minichipkarte hin eine erhöhte Klebkraft auf, so daß sich die Minichipkarte mit dem Klebeband wieder aus der Adapterkarte herauslösen läßt, um gegebenenfalls nach Zufügung einer Schutzschicht wieder als Minichipkarte verwendet werden zu können.

Die vorliegende Erfindung wird im folgenden unter Bezugnahme auf die beiliegenden Zeichnungen näher erläutert. Dabei zeigen die Zeichnungen im einzelnen:
Fig. 1 eine schematische Ansicht einer Minichipkarte 1, die in einen Standardchipkartenkörper 2 eingesetzt ist,
Fig. 2 eine schematische Darstellung zur Erläuterung der Herstellungsweise der erfindungsgemäßen Minichipkarte, und
Fig. 3 eine schematische Querschnittsansicht zur Erläuterung des Einsetzens der erfindungsgemäßen Minichipkarte in eine Adapterkarte.

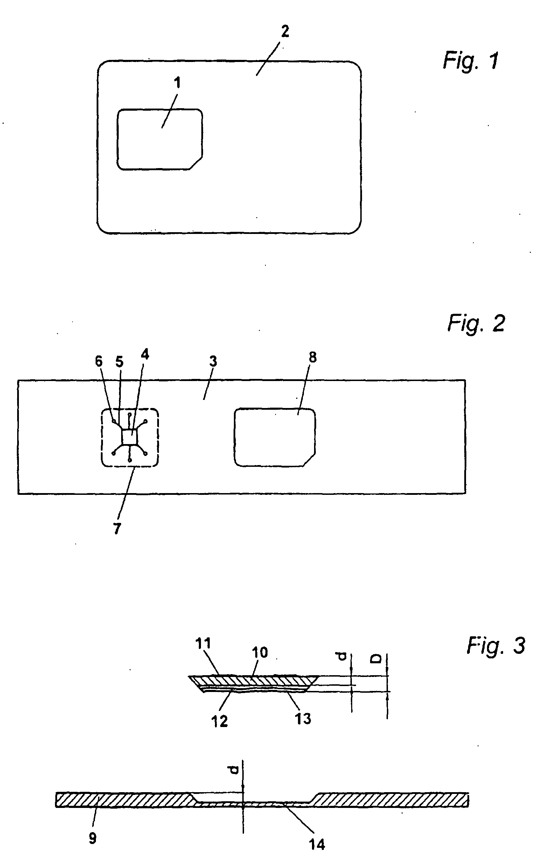

Fig. 1 zeigt eine Minichipkarte 1, die in einen Standardkartenadapter 2 eingesetzt ist. Gemäß dem Stand der Technik ist bekannt, die Minichipkarte 1 gemeinsam mit dem Standardkartenkörper 2 herzustellen und anschließend die Minichipkarte aus dem Standardkartenkörper herauszubrechen. Auch ist bekannt, eine herausgebrochene Standardchipkarte wieder in eine Adapterkarte einzusetzen. Gemäß der vorliegenden Erfindung werden Minichipkarten 1 direkt hergestellt, ohne daß dazu auch die Herstellung eines Standardchipkartenkörpers 2 erforderlich ist.

Fig. 2 verdeutlicht in schematischer Weise den Herstellungsvorgang für die erfindungsgemäße Chipkarte. Auf einem Trägerfilm 3 ist bereits der IC 4 mittels Bondverbindungen 5 durch Löcher 6 des Films mit auf der anderen Seite der Trägerfolie 3 aufgebrachten Anschlußkontakten verbunden. Gemäß dem Stand der Technik wird der so angeschlossene IC mittels eines Harztropfens oder gemäß Mouldtechnologie verkappt, so daß anschließend eine gestrichelt dargestellte Verkappung 7 verbleibt, die den Chip und seine Anschlußkontakte einschließt. Dieses so erhaltene Chipmodul wird anschließend aus dem Trägerfilm 3 ausgestanzt und in einen Kartenkörper eingesetzt. Zur Herstellung von Minichipkarten gemäß dem Stand der Technik wird aus der auf diese Weise fertiggestellten Karte anschließend die Minichipkarte ausgestanzt.

Gemäß der vorliegenden Erfindung werden diese zusätzlichen Schritte vermieden, indem die Verkappung bereits in die Form der späteren Minichipkarte gepreßt wird, so daß eine Verkappung 8 in Form einer Minichipkarte entsteht. Dieses die Form einer Minichipkarte aufweisende Modul wird anschließend aus dem Trägerfilm 3 ausgestanzt und dient als Minichipkarte. Auch ist denkbar, die Verkappung 8 in einer Form herzustellen, die noch nicht die endgültigen Minichipkartenabmessungen aufweist und die eigentliche Minichipkarte dann aus der Verkappung 8 auszustanzen. Hierzu ist wiederum denkbar, daß der gesamte Trägerfilm 3 mit einer Verkappung 8 überzogen wird und die einzelnen Minichipkarten anschließend ausgestanzt werden.

Fig. 3 verdeutlicht das Einsetzen einer so hergestellten Minichipkarte in einen Standardchipkartenkörper 9. Die hergestellte Minichipkarte 10 weist auf ihrer Oberseite schematisch dargestellte Anschlußkontakte 11 auf und ist vorzugsweise an den Rändern abgeschrägt. Die Minichipkarte 10 weist auf ihrer Unterseite ein Klebeband 12 auf, das vorzugsweise durch eine Schutzfolie oder ein Schutzpapier 13 überdeckt ist. Bevor die Minichipkarte 10 in den Kartenkörper 9 eingesetzt wird, wird die Schutzfolie 13 entfernt, so daß die Minichipkarte 10 mit dem Kartenkörper verklebt werden kann.

Die Dicke D der Minichipkarte ist zumindest mit der Schutzfolie so bemessen, daß die Minichipkarte für übliche Anwendungen eingesetzt werden kann. Nach Abziehen der Schutzfolie 13 weist die Minichipkarte eine entsprechend verringerte Dicke d auf, die vorzugsweise mit der Tiefe der Ausfräsung 14 in dem Kartenkörper 9 übereinstimmt, so daß die Oberfläche der Minichipkarte 10 nach dem Einsetzen mit der Oberfläche des Kartenkörpers 9 abschließt.

Die abgeschrägten Ränder der Minichipkarte 10, die mit entsprechenden Abschrägungen der Ausfräsung 14 in dem Kartenkörper 9 übereinstimmen, dienen der positionsgenauen Anordnung in dem Standardkartenkörper 9.

Eine Standardchipkarte weist üblicherweise die Iso-Dicke von 0,8 mm auf. Vorzugsweise kann somit die Minichipkarte mit der Schutzfolie 13 ebenfalls eine Dicke von 0,8 mm aufweisen, und nach Entfernen des Schutzstreifens kann eine verbleibende Dicke d mit ca. 0,65 mm verbleiben. Diese Dicke entspricht, wie oben ausgeführt, der Tiefe der Ausfräsung 14 in der Standardkarte oder Adapterkarte 9. Da die Klebeschicht 12 beispielsweise eine Dicke von 0,03 bis 0,05 mm aufweist, liegt die Dicke der eigentlichen Verkappung 8 bei etwa 0,58 bis 0,60 mm.

Die Klebeschicht 12 ist vorzugsweise als doppelseitiges Klebeband ausgeführt und weist vorzugsweise zur Minichipkarte 10 hin eine höhere Klebkraft auf, wodurch das Herauslösen der Minichipkarte 10 aus dem Kartenkörper 9 ermöglicht wird. Eine so herausgelöste Minichipkarte 10 kann dann wiederum mit einer Schutzfolie abgedeckt und derart als Minichipkarte verwendet werden.

## Patentansprüche

1. Minichipkarte mit:
einem Trägerfilm, der auf einer Seite Anschlußkontakte für die Karte trägt und auf der anderen Seite den IC, wobei der IC über elektrische Verbindungen, vorzugsweise über Bond-Verbindungen, durch Löcher des Trägerfilms hindurch mit den Anschlußkontakten verbunden ist,
einer gemouldeten Chipverkappung aus Kunststoff, durch die der Chip und die elektrischen Verbindungen verkappt sind,
**dadurch gekennzeichnet, daß**
die gemouldete Chipverkappung gleichzeitig als Kartenkörper dient und somit die für die Minichipkarte gewünschten Außenabmessungen aufweist.

2. Minichipkarte nach Anspruch 1, **dadurch gekennzeichnet, daß** die Minichipkarte Abmessungen gemäß dem ID-000-Format aufweist.

3. Minichipkarte nach Anspruch 1, **dadurch gekennzeichnet, daß** die Minichipkarte auf der den Anschlußkontakten abgewandten Seite ein doppelseitiges Klebeband aufweist, das von einer Schutzfolie abgeschlossen wird.

4. Minichipkarte nach Anspruch 3, **dadurch gekennzeichnet, daß** die Dicke der Minichipkarte mit Schutzfolie die für die gewünschte Anwendung notwendige Dicke, vorzugsweise eine Dicke entsprechend dem ID-000-Format, aufweist.

5. Minichipkarte nach Anspruch 3, **dadurch gekennzeichnet, daß** die Dicke der Minichipkarte zumindest nach Entfernen der Schutzfolie geringer ist als die Dicke einer Standardchipkarte, so daß die Minichipkarte in eine Standardchipkarte einsetzbar ist, in die ein Bereich entsprechend der Minichipkarte ausgefräst wurde und nach Einsetzen und Verkleben mittels des Klebebandes bündig mit der Oberfläche der Standardchipkarte abschließt.

6. Standardchipkarte, vorzugsweise nach dem ID-1-Format, **dadurch gekennzeichnet, daß** in dem Standardchipkartenkörper ein Bereich ausgefräst ist, der in seinen Abmessungen der Minichipkarte gemäß den Ansprüchen 1 bis 6 entspricht und daß in den ausgefrästen Bereich eine Minichipkarte gemäß den Ansprüchen 1 bis 6 eingeklebt ist.

7. Verfahren zur Herstellung einer Minichipkarte mit folgenden Schritten:
Verwenden eines Trägerfilms;
Aufbringen von Anschlußkontakten auf einer Seite des Trägerfilms;
Aufbringen eines ICs auf der anderen Seite des Trägerfilms und Verbinden des ICs über Bond-Verbindungen durch Löcher des Trägerfilms hindurch mit den Anschlußkontakten;
Verkappen des ICs mittels Mouldtechnik, **dadurch gekennzeichnet, daß** beim Verkappen eine Form vewendet wird, die die Abmessungen der gewünschten Minichipkarte definiert und somit ein verkapptes Chipkartenmodul erzeugt wird, bei dem die Verkappung die Form der zu erstellenden Minichipkarte aufweist, und
Verwenden des so hergestellten Chipkartenmoduls als Minichipkarte.

8. Verfahren nach Anspruch 7, **dadurch gekennzeichnet, daß** die Dicke des erstellten Chipkartenmoduls geringer ist als die Dicke einer Standardchipkarte und vorzugsweise im Bereich von 0,58 bis 0,60 mm liegt.

9. Verfahren nach Anspruch 7 oder 8, **dadurch gekennzeichnet, daß** auf der von den Kontakten abgewandten Seite des Chipkartenmoduls eine Klebeschicht aufgebracht wird, vorzugsweise in Form eines doppelseitigen Klebebandes.

10. Verfahren nach Anspruch 9, **dadurch gekennzeichnet, daß** das doppelseitige Klebeband von einer Schutzfolie abgeschlossen wird und daß die so erreichte Gesamtdicke des als Minichipkarte dienenden Chipmoduls einer Standardchipkartendicke entspricht und vorzugsweise 0,8 mm beträgt.

11. Verfahren zum Erstellen einer Standardchipkarte mit folgenden Schritten:
Verwenden eines Standardchipkartenkörpers und Ausfräsen eines Bereichs in dem Standardchipkartenkörper, der den Abmessungen einer gemäß dem Anspruch 10 hergestellten Minichipkarte entspricht, und
Einkleben einer Minichipkarte gemäß Anspruch 10, nachdem die Schutzfolie abgezogen wurde.
